# EUROPEAN PATENT APPLICATION

(11) **EP 4 578 668 A1**
(43) Date of publication of application: **02.07.2025**
(21) Application number: 24215137.1
(22) Date of filing: 25.11.2024
(51) Int. Cl.: B60C 9/18, B60C 11/00, B60C 11/04

(54) **TIRE**

(30) Priority: 25.12.2023 JP 2023218596
(71) Applicant: Sumitomo Rubber Industries, Ltd., Kobe-shi, Hyogo 651-0072 (JP)
(72) Inventor: IKEDA, Ryota, Kobe-shi, Hyogo, 651-0072 (JP)
(74) Representative: Manitz Finsterwald Patent- und Rechtsanwaltspartnerschaft mbB

(57) **Abstract**

A tire 2 includes a tread 4 and a belt 20. Each end BE of a base layer 34 of the tread 4 is located axially inward of an end 20e of the belt 20. The tread 4 includes circumferential grooves 30, thereby forming land portions 32 including a crown land portion 32c, a shoulder land portion 32s, and a middle land portion 32m. A cap layer proportion ARc of the crown land portion 32c is not less than 1.5 and not greater than 3.5. A cap layer proportion ARm of the middle land portion 32m is equal to or higher than the cap layer proportion ARc of the crown land portion 32c. A cap layer proportion ARs of the shoulder land portion 32s is higher than the cap layer proportion ARm of the middle land portion 32m and not less than 5.0 and not greater than 9.5.

## Description

### BACKGROUND OF THE INVENTION

### Field of the Invention

The present invention relates to a tire. Specifically, the present invention relates to a tire that is mounted to a passenger car.

### Background Art

From the viewpoint of consideration for the environment, reduction of rolling resistance is required for tires that are mounted to vehicles. Therefore, for example, decreasing the number of components included in a tire, decreasing the thicknesses of the components, using rubbers having a low loss tangent as the materials forming the components, etc., are considered (for example, Japanese Laid-Open Patent Publication No. 2021-120242).

The tread of a tire comes into contact with a road surface. A cap layer becomes worn, and eventually a base layer becomes exposed. During limit running (e.g., when a vehicle corners at a high speed), a shoulder portion of the tire (specifically, a tread portion) also comes into contact with the road surface.

During limit running, a large load acts on the shoulder portion. The base layer is more brittle than the cap layer. If the cap layer becomes worn and the base layer becomes exposed, the tread may peel off. Therefore, various measures are taken for tires to prevent treads from peeling off.

An object of the present invention is to provide a tire that can suppress occurrence of tread peeling while suppressing an increase in rolling resistance.

### SUMMARY OF THE INVENTION

A tire according to one aspect of the present invention includes a pair of beads, a carcass extending on and between the pair of beads, a tread located radially outward of the carcass, and a belt located between the tread and the carcass. The tread includes a base layer and a cap layer covering the entire base layer. The cap layer is harder than the base layer. A loss tangent at 70°C of the base layer is lower than a loss tangent at 30°C of the cap layer. Each end of the base layer is located axially inward of an end of the belt. The belt includes an inner belt ply and an outer belt ply located radially outward of the inner belt ply. Each end of the outer belt ply is located axially inward of an end of the inner belt ply. The tread has a tread pattern including a plurality of circumferential grooves, thereby forming a plurality of land portions aligned in an axial direction in the tread. The plurality of land portions include, in a portion between an equator plane of the tire and an end of the tread, a crown land portion located on the equator plane side, a shoulder land portion located on the tread end side, and a middle land portion located between the crown land portion and the shoulder land portion. A proportion ARc of the cap layer occupying the crown land portion is represented as an average value of a ratio of a cap layer thickness to a base layer thickness in the crown land portion, a proportion ARm of the cap layer occupying the middle land portion is represented as an average value of a ratio of a cap layer thickness to a base layer thickness in the middle land portion, and a proportion ARs of the cap layer occupying the shoulder land portion is represented as an average value of a ratio of a cap layer thickness to a base layer thickness in the shoulder land portion. The cap layer proportion ARc of the crown land portion is not less than 1.5 and not greater than 3.5. The cap layer proportion ARm of the middle land portion is equal to or higher than the cap layer proportion ARc of the crown land portion. The cap layer proportion ARs of the shoulder land portion is higher than the cap layer proportion ARm of the middle land portion and not less than 5.0 and not greater than 9.5.

According to the present invention, a tire that can suppress occurrence of tread peeling while suppressing an increase in rolling resistance, is obtained.

### BRIEF DESCRIPTION OF THE DRAWINGS

FIG. 1 is a cross-sectional view showing a part of a tire according to one embodiment of the present invention;
FIG. 2 is a development view showing a tread pattern;
FIG. 3 is a schematic diagram showing a ground-contact surface shape of the tire;
FIG. 4 is an enlarged cross-sectional view showing a part of the tire;
FIG. 5 is an enlarged cross-sectional view showing a part of the tire;
FIG. 6 is an enlarged cross-sectional view showing a part of the tire;
FIG. 7 is a development view showing a modification of the tread pattern;
FIG. 8 is an enlarged cross-sectional view showing a shoulder portion of a conventional tire; and
FIG. 9 is an enlarged cross-sectional view showing a shoulder portion of another conventional tire.

### DETAILED DESCRIPTION

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to 250 kPa, and no load is applied to the tire is referred to as standard state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, the "nominal cross-sectional width" is the "nominal cross-sectional width" included in the "tire designation" specified in JIS D4202 "Automobile tyres-Designation and dimensions".

In the present invention, a load index (LI) is, for example, an index that is specified in the JATMA standard and that represents a maximum mass allowed to be applied to the tire under specified conditions, that is, a maximum load capacity, as an index number.

In the present invention, the hardness of a component formed from a crosslinked rubber, of the components included in the tire, is measured according to the standards of JIS

K6253 under a temperature condition of 23°C using a type A durometer.

In the present invention, a loss tangent (tan δ) of a component formed from a crosslinked rubber, of the components included in the tire, is measured using a viscoelasticity spectrometer according to the standards of JIS K6394. The measurement conditions are as follows.
Initial strain = 10%
Dynamic strain = ±1%
Frequency = 10 Hz
Mode = stretch mode
Temperature = 30°C or 70°C

In this measurement, a test piece (40 mm long × 4 mm wide × 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A portion of the tread portion at each end thereof is also referred to as shoulder portion. A portion of the tread portion at an equator plane, that is, a center portion thereof, is also referred to as crown portion.

### [Findings on Which Present Invention Is Based]

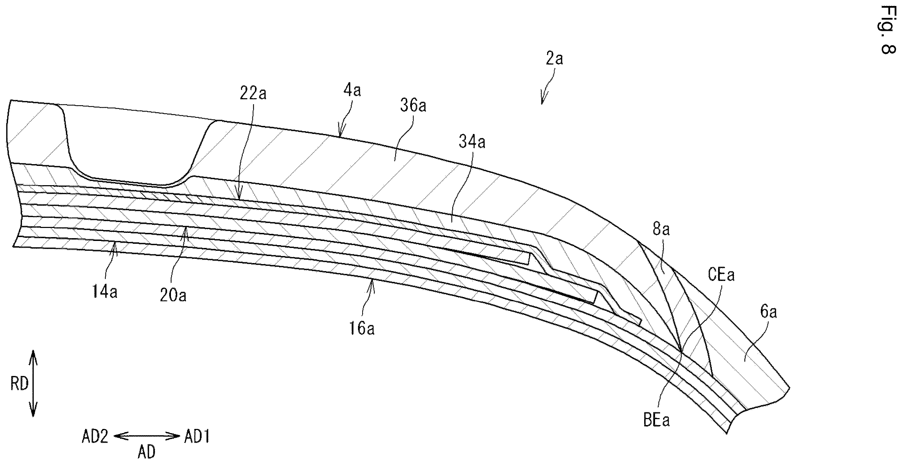

FIG. 8 shows a part of a conventional tire 2a. A tread 4a of the tire 2a includes a cap layer 36a and a base layer 34a. As shown in FIG. 8, an end BEa of the base layer 34a coincides with an end CEa of the cap layer 36a.

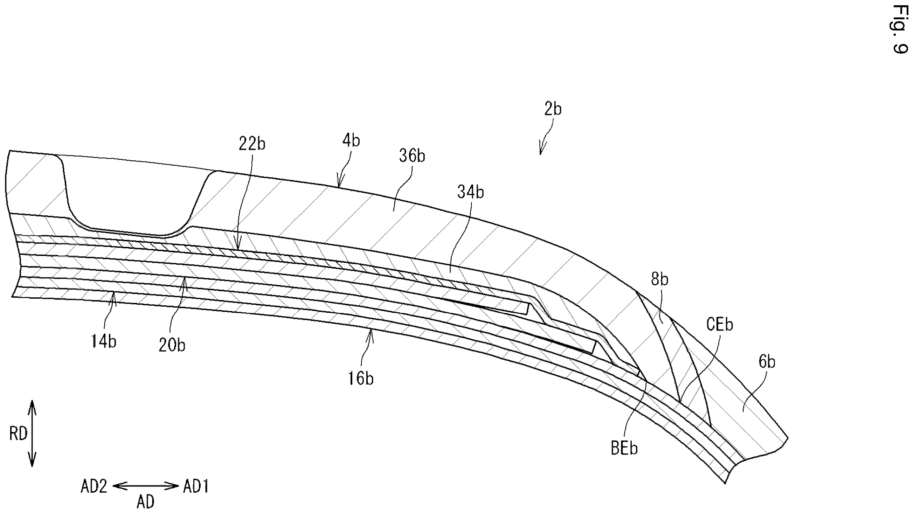

FIG. 9 shows a shoulder portion of another conventional tire 2b. In the tire 2b, an end BEb of a base layer 34b is located axially inward of an end CEb of a cap layer 36b. In the tire 2b, the cap layer 36b covering a portion of the base layer 34b at the end BEb is thicker than in the tire 2a shown in FIG. 8. In the shoulder portion, the base layer 34b of the tire 2b is less likely to be exposed than the base layer 34a of the tire 2a shown in FIG. 8. A tread 4b of the tire 2b is less likely to peel off than the tread 4a of the tire 2a.

Electric vehicles are becoming increasingly widespread due to environmental considerations. Electric vehicles are equipped with batteries. Batteries enabling travelling for a distance of around 500 km are heavy. Therefore, electric vehicles tend to be heavier than conventional gasoline-powered vehicles. Higher loads act on tires mounted on electric vehicles, than on tires mounted on gasoline-powered vehicles.

As described above, the tread 4b of the tire 2b shown in FIG. 9 is less likely to peel off than the tread 4a of the tire 2a shown in FIG. 8. However, since electric vehicles are heavier than conventional gasoline-powered vehicles, the tread 4b may peel off even in the tire 2b for which a countermeasure for tread peeling has been taken.

Therefore, the present inventor has studied a technology capable of suppressing peeling of a tread while minimizing the influence on other performances (e.g., rolling resistance), in consideration of mounting to an electric vehicle, and has completed the invention described below.

### [Outline of Embodiments of Present Invention]

The present invention is directed to a tire including a pair of beads, a carcass extending on and between the pair of beads, a tread located radially outward of the carcass, and a belt located between the tread and the carcass, wherein
the tread includes a base layer and a cap layer covering the entire base layer,
the cap layer is harder than the base layer,
a loss tangent at 70°C of the base layer is lower than a loss tangent at 30°C of the cap layer,
each end of the base layer is located axially inward of an end of the belt,
the belt includes an inner belt ply and an outer belt ply located radially outward of the inner belt ply,
each end of the outer belt ply is located axially inward of an end of the inner belt ply,
the tread has a tread pattern including a plurality of circumferential grooves, thereby forming a plurality of land portions aligned in an axial direction in the tread,
the plurality of land portions include, in a portion between an equator plane of the tire and an end of the tread, a crown land portion located on the equator plane side, a shoulder land portion located on the tread end side, and a middle land portion located between the crown land portion and the shoulder land portion,
a proportion ARc of the cap layer occupying the crown land portion is represented as an average value of a ratio of a cap layer thickness to a base layer thickness in the crown land portion,
a proportion ARm of the cap layer occupying the middle land portion is represented as an average value of a ratio of a cap layer thickness to a base layer thickness in the middle land portion,
a proportion ARs of the cap layer occupying the shoulder land portion is represented as an average value of a ratio of a cap layer thickness to a base layer thickness in the shoulder land portion,
the cap layer proportion ARc of the crown land portion is not less than 1.5 and not greater than 3.5,
the cap layer proportion ARm of the middle land portion is equal to or higher than the cap layer proportion ARc of the crown land portion, and
the cap layer proportion ARs of the shoulder land portion is higher than the cap layer proportion ARm of the middle land portion and not less than 5.0 and not greater than 9.5.

The tire of the present invention can suppress occurrence of tread peeling while suppressing an increase in rolling resistance. The mechanism by which this effect is achieved has not been clarified, but is inferred as follows.

In the tire, each end of the base layer is located axially inward of the end of the belt. In the tire, the cap layer covering a portion of the base layer at the end thereof is thicker than in the conventional tires. In each shoulder portion, the base layer is less likely to be exposed. During limit running in which a large load acts on the shoulder portion, the tread is less likely to peel off.

In the tire, the proportion of the base layer occupying the shoulder land portion is low. The cap layer is harder than the base layer. Therefore, there is a concern that rolling resistance may increase, ride comfort may decrease, and road noise may increase, decreasing quietness.

However, in the tire, the cap layer proportion ARc of the crown land portion is not less than 1.5 and not greater than 3.5, the cap layer proportion ARm of the middle land portion is equal to or higher than the cap layer proportion ARc of the crown land portion, and the cap layer proportion ARs of the shoulder land portion is higher than the cap layer proportion ARm of the middle land portion and not less than 5.0 and not greater than 9.5. In other words, the proportion of the base layer occupying the land portion is lower in the shoulder land portion and higher in the crown land portion and the middle land portion. The base layer is softer and less likely to generate heat than the cap layer. The crown land portion and the middle land portion having a higher base layer proportion can contribute to suppressing an increase in rolling resistance, a decrease in ride comfort, and a decrease in quietness.

The tire can suppress occurrence of tread peeling while suppressing an increase in rolling resistance, a decrease in ride comfort, and a decrease in quietness.

Preferably, a position of each end of the cap layer coincides with a position of the end of the belt in the axial direction, or each end of the cap layer is located axially outward of the end of the belt.

In this case, each end of the base layer is covered with the cap layer having a sufficient thickness. In each shoulder portion, the base layer is less likely to be exposed. During limit running in which a large load acts on the shoulder portion, the tread is less likely to peel off. The tire can effectively suppress occurrence of tread peeling.

Preferably, a ground-contact surface obtained when the tire is fitted onto a standardized rim, an internal pressure of the tire is adjusted to 250 kPa, a camber angle of the tire is set to 0 degrees, a vertical load is applied to the tire, and the tire is brought into contact with a road surface composed of a flat surface, is a standard ground-contact surface,
the vertical load applied to the tire is not less than 60% and not greater than 80% of a load indicated by a load index of the tire,
a ground-contact width of the standard ground-contact surface is not less than 70% and not greater than 80% of a nominal cross-sectional width of the tire, and
a ratio of a sum of groove widths of the plurality of circumferential grooves included in the standard ground-contact surface to the ground-contact width of the standard ground-contact surface is not less than 20% and not greater than 30%.

In this case, responsiveness, ride comfort, and quietness are well balanced. The tire can suppress occurrence of tread peeling while suppressing an increase in rolling resistance, a decrease in responsiveness, a decrease in ride comfort, and a decrease in quietness.

Preferably, the tread pattern includes the four circumferential grooves, thereby forming the five land portions in the tread,
the five land portions are the crown land portion located on the equator plane, a pair of the middle land portions located axially outward of the crown land portion, and a pair of the shoulder land portions located axially outward of the respective middle land portions, and
a ratio of a width of the crown land portion to the ground-contact width of the standard ground-contact surface is not less than 14% and not greater than 16%.

In this case, the crown land portion having an appropriate width is formed. In a four-wheeled vehicle (e.g., passenger car) on which the tire is mounted, a higher cornering force is generated at each front tire than at the conventional tires. The tire can effectively suppress an increase in rolling resistance and occurrence of tread peeling while suppressing a decrease in responsiveness.

Preferably, of the two ends of the tread, one end located on an inner side in a width direction of a vehicle when the tire is mounted on the vehicle is a first reference end, and another end is a second reference end,
a width of the shoulder land portion on the first reference end side is not less than 90% and not greater than 100% of the width of the crown land portion,
a width of the middle land portion on the first reference end side is not less than 90% and not greater than 100% of the width of the crown land portion,
a width of the middle land portion on the second reference end side is not less than 97% and not greater than 107% of the width of the crown land portion, and
a width of the shoulder land portion on the second reference end side is not less than 114% and not greater than 124% of the width of the crown land portion.

In this case, the ratio of a cornering force at each rear tire to a cornering force at each front tire is effectively increased compared to the conventional tires. The tire can effectively suppress an increase in rolling resistance and occurrence of tread peeling while improving linearity.

Preferably, the first reference end side of the crown land portion with respect to the equator plane is a first portion, and the second reference end side of the crown land portion with respect to the equator plane is a second portion, and
a ratio of a width of the second portion to the width of the crown land portion is not less than 51% and not greater than 55%.

In this case, compared to the conventional tires, the tire can effectively increase the ratio of a cornering force at each rear tire to a cornering force at each front tire while effectively increasing the cornering force generated at each front tire. The tire can effectively suppress an increase in rolling resistance and occurrence of tread peeling while improving responsiveness and linearity.

### [Details of Embodiments of Present Invention]

Hereinafter, the present invention will be described in detail based on preferred embodiments with appropriate reference to the drawings.

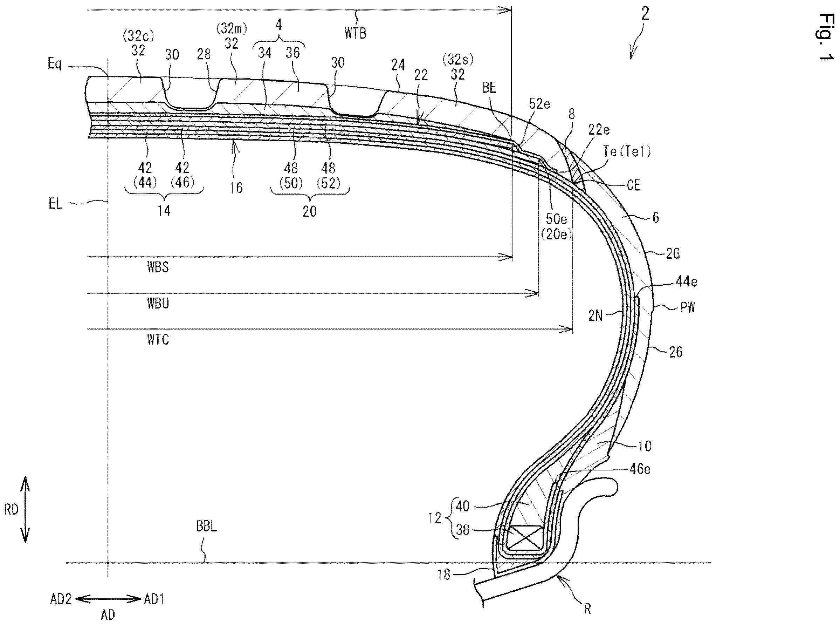

FIG. 1 shows a part of a tire 2 according to one embodiment of the present invention. The tire 2 is a pneumatic tire for a passenger car. The tire 2 in FIG. 1 is new. A tread 4 is not worn.

FIG. 1 shows a part of a cross-section, of the tire 2, along a plane including the rotation axis (not shown) of the tire 2. The cross-section shown in FIG. 1 is also referred to as meridian cross-section. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the drawing sheet of FIG. 1 is the circumferential direction of the tire 2.

In FIG. 1, an alternate long and short dash line EL extending in the radial direction represents the equator plane of the tire 2.

In FIG. 1, the tire 2 is fitted on a rim R. The space between the tire 2 and the rim R is filled with air, for example, to adjust the internal pressure of the tire 2. The rim R is a standardized rim.

In FIG. 1, a solid line BBL extending in the axial direction is a bead base line. This bead base line BBL is a line that defines the rim diameter (see JATMA or the like) of the rim R.

In FIG. 1, a position indicated by reference character Eq is the point of intersection of an outer surface 2G of the tire 2 (specifically, a tread surface described later) and the equator plane EL. The point of intersection Eq is the equator of the tire 2.

In the case where a groove is located on the equator plane EL, the equator Eq is specified on the basis of a virtual outer surface obtained on the assumption that irregularities such as grooves are not provided thereon. The equator Eq is a radially outer end of the tire 2.

In FIG. 1, a position indicated by reference character PW is an axially outer end (hereinafter referred to as outer end PW) of the tire 2. In the case where decorations such as patterns and letters are present on the outer surface 2G, the outer end PW is specified on the basis of a virtual outer surface obtained on the assumption that the decorations are not present thereon. The distance in the axial direction from one outer end PW to the other outer end PW, which is specified in the tire 2 in the standardized state, is the cross-sectional width (see JATMA or the like) of the tire 2.

In the present invention, the "nominal cross-sectional width" is used, and this "nominal cross-sectional width" means the "nominal cross-sectional width" included in the "tire designation" specified in JIS D4202 "Automobile tyres-Designation and dimensions". For example, if tire size indicated in the "tire designation" of the tire 2 is 245/50R19, the nominal cross-sectional width of the tire 2 is 245 mm.

The nominal cross-sectional width of the tire (i.e., the tire 2) to which the present invention is applied is not less than 215 mm and not greater than 325 mm. The load index (LI) of the tire 2 is not less than 90.

The tire 2 includes the tread 4, a pair of sidewalls 6, a pair of wings 8, a pair of clinches 10, a pair of beads 12, a carcass 14, an inner liner 16, a pair of chafers 18, a belt 20, and a band 22.

The tread 4 is located radially outward of the carcass 14. The tread 4 is formed from a crosslinked rubber. In FIG. 1, a position indicated by reference character Te is an end of the tread 4.

In the present invention, of two ends Te of the tread 4, one end Te located on the inner side in the width direction of a vehicle (not shown) when the tire 2 is mounted on the vehicle is a first reference end Te1, and the other end Te is a second reference end Te2. In FIG. 1, the end Te of the tread 4 located on an arrow AD1 side is the first reference end Te1, and is located on the inner side in the width direction of the vehicle when the tire 2 is mounted on the vehicle. Although not shown, the end Te of the tread 4 located on an arrow AD2 side is the second reference end Te2, and is located on the outer side in the width direction of the vehicle when the tire 2 is mounted on the vehicle.

The tread 4 comes into contact with a road surface at a tread surface 24 thereof. The tread 4 has the tread surface 24.

A side surface 26 is connected to the tread surface 24. The outer surface 2G of the tire 2 includes the tread surface 24 and a pair of such side surfaces 26. The tread surface 24 includes the equator Eq, and each side surface 26 includes a maximum width position PW.

Although not described in detail, the contour of the tread surface 24 in the meridian cross-section is represented as the contour of a virtual tread surface obtained on the assumption that irregularities such as grooves are not provided thereon. The contour of the tread surface 24, that is, the contour of the virtual tread surface, includes a plurality of arcs and is formed by combining these arcs such that adjacent arcs are tangent to each other.

Among the plurality of arcs forming the contour of the tread surface 24, the arc located on each outermost side in the axial direction has the smallest radius. The side surface 26 is connected to this arc having the smallest radius.

Grooves 28 are formed on the tread 4. Accordingly, a tread pattern is formed.

The tread pattern includes a plurality of circumferential grooves 30 extending continuously in the circumferential direction. Accordingly, a plurality of land portions 32 aligned in the axial direction are formed in the tread 4. The land surfaces of the land portions 32 are included in the tread surface 24.

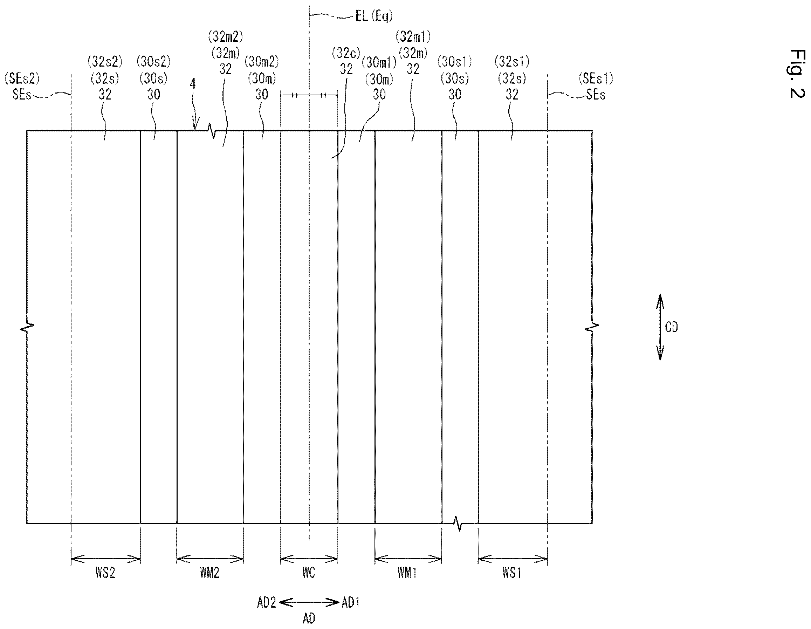

FIG. 2 is a development view showing a part of the tread surface 24. A direction indicated by a double-headed arrow AD is the axial direction of the tire 2. A direction indicated by a double-headed arrow CD is the circumferential direction of the tire 2. In FIG. 2, a direction indicated by an arrow AD1 corresponds to the first reference end Te1 side, and a direction indicated by an arrow AD2 corresponds to the second reference end Te2 side.

In FIG. 2, for convenience of description, grooves other than the circumferential grooves 30 are not shown. The tread 4 of the tire 2 is not limited to a tread 4 on which only the circumferential grooves 30 are formed. On the tread 4, lateral grooves extending substantially in the axial direction or sipes may be formed.

The tread pattern of the tire 2 includes four circumferential grooves 30 aligned in the axial direction. The groove depth of each circumferential groove 30 is not less than 5.0 mm and not greater than 7.5 mm. The groove width of each circumferential groove 30 is not less than 5.0 mm and not greater than 20.0 mm.

Among the four circumferential grooves 30, two circumferential grooves 30 each located on the outermost side in the axial direction are shoulder circumferential grooves 30s. Two circumferential grooves 30 located axially inward of the shoulder circumferential grooves 30s are middle circumferential grooves 30m. The tread pattern of the tire 2 includes the pair of shoulder circumferential grooves 30s, and the pair of middle circumferential grooves 30m located between the pair of shoulder circumferential grooves 30s. In the tire 2, at least one circumferential groove may be provided between the pair of middle circumferential grooves 30m.

In the tire 2, of the two middle circumferential grooves 30m, the middle circumferential groove 30m located on the first reference end Te1 side is a first middle circumferential groove 30m1, and the middle circumferential groove 30m located on the second reference end Te2 side is a second middle circumferential groove 30m2.

Of the two shoulder circumferential grooves 30s, the shoulder circumferential groove 30s located on the first reference end Te1 side is a first shoulder circumferential groove 30s1, and the shoulder circumferential groove 30s located on the second reference end Te2 side is a second shoulder circumferential groove 30s2.

As described above, the tread pattern of the tire 2 includes the four circumferential grooves 30 aligned in the axial direction. Accordingly, five land portions 32 extending in the circumferential direction are formed. The edges of the circumferential grooves 30 are also the edges of the land portions 32.

Among the five land portions 32 aligned in the axial direction, two land portions 32 each located on the outermost side are shoulder land portions 32s. Each shoulder land portion 32s includes a ground-contact end SEs of a standard ground-contact surface described later. Two land portions 32 located axially inward of the shoulder land portions 32s are middle land portions 32m. A land portion 32 located between the two middle land portions 32m is a crown land portion 32c. The crown land portion 32c of the tire 2 includes the equator Eq.

In the tread pattern, the four circumferential grooves 30 are arranged symmetrically with respect to the equator plane EL. Therefore, the five land portions 32 are also arranged symmetrically with respect to the equator plane EL.

The five land portions 32 formed in the tread 4 are the crown land portion 32c located on the equator plane EL, the pair of middle land portions 32m located axially outward of the crown land portion 32c, and the pair of shoulder land portions 32s located axially outward of the respective middle land portions 32m.

As shown in FIG. 1, in the tire 2, the plurality of land portions 32 include, in a portion between the equator plane EL and each end Te of the tread 4, the crown land portion 32c located on the equator plane EL side, the shoulder land portion 32s located on the end Te side of the tread 4, and the middle land portion 32m located between the crown land portion 32c and the shoulder land portion 32s.

Although not shown, for example, one circumferential groove 30 may be further provided between the pair of middle circumferential grooves 30m, and two crown land portions 32c may be formed. In this case, the circumferential groove 30 located between the two crown land portions 32c is also referred to as crown circumferential groove. In this case as well, the plurality of land portions 32 formed in the tread 4 include, in the portion between the equator plane EL and each end Te of the tread 4, the crown land portion 32c located on the equator plane EL side, the shoulder land portion 32s located on the end Te side of the tread 4, and the middle land portion 32m located between the crown land portion 32c and the shoulder land portion 32s. The crown land portion 32c does not include the equator Eq, but the crown circumferential groove is located on the equator plane EL.

In the tire 2, of the two middle land portions 32m, the middle land portion 32m located on the first reference end Te1 side is a first middle land portion 32m1, and the middle land portion 32m located on the second reference end Te2 side is a second middle land portion 32m2.

Of the two shoulder land portions 32s, the shoulder land portion 32s located on the first reference end Te1 side is a first shoulder land portion 32s1, and the shoulder land portion 32s located on the second reference end Te2 side is a second shoulder land portion 32s2.

The width of each land portion 32 formed in the tread 4 is represented as the distance in the axial direction from one edge to the other edge of the land portion 32, except for the shoulder land portions 32s. The width of each shoulder land portion 32s is represented as the distance in the axial direction from the edge on the equator plane EL side of the shoulder land portion 32s to the ground-contact end SEs of the standard ground-contact surface.

In the case where each edge of each land portion 32 is formed by chamfering such as rounding, the width of the land portion 32 is represented with the point of intersection of an extension line of the land surface of the land portion 32 and an extension line of each wall surface of the land portion 32 as each edge of the land portion 32. The extension line of the land surface is the contour of the tread surface 24. The extension line of each wall surface is represented as a tangent line of the wall surface with the boundary between the wall surface and the chamfered portion as a tangent point.

In FIG. 2, a length indicated by a double-headed arrow WC is the width of the crown land portion 32c. In the tire 2, the equator plane EL intersects the crown land portion 32c at the center of the width WC of the crown land portion 32c.

In FIG. 2, a length indicated by a double-headed arrow WM1 is the width of the first middle land portion 32m1. A length indicated by a double-headed arrow WM2 is the width of the second middle land portion 32m2. In the tire 2, the width WM1 of the first middle land portion 32m1 is equal to the width WM2 of the second middle land portion 32m2.

In FIG. 2, a length indicated by a double-headed arrow WS1 is the width of the first shoulder land portion 32s1. A length indicated by a double-headed arrow WS2 is the width of the second shoulder land portion 32s2. In the tire 2, the width WS1 of the first shoulder land portion 32s1 is equal to the width WS2 of the second shoulder land portion 32s2.

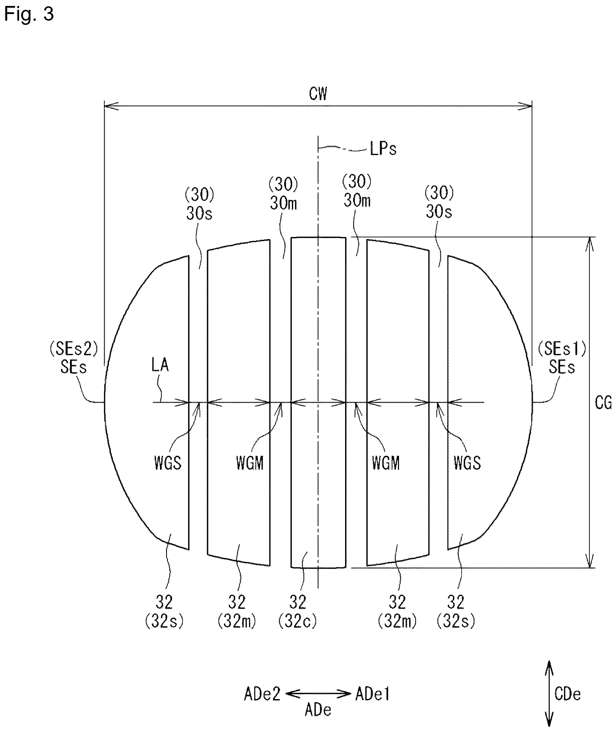

FIG. 3 schematically shows a ground-contact surface shape of the tire 2. In FIG. 3, a direction indicated by a double-headed arrow ADe corresponds to the axial direction of the tire 2. A direction indicated by a double-headed arrow CDe corresponds to the circumferential direction of the tire 2. In FIG. 3, a direction indicated by an arrow ADe1 corresponds to the first reference end Te1 side, and a direction indicated by an arrow ADe2 corresponds to the second reference end Te2 side.

A ground-contact surface is obtained, for example, using a ground-contact surface shape measuring device (not shown). The ground-contact surface is obtained when the tire 2 is fitted onto the rim R, the internal pressure of the tire 2 is adjusted, a vertical load is applied to the tire 2, and the tire 2 is brought into contact with a road surface composed of a flat surface in this device. To obtain the ground-contact surface, the tire 2 is placed such that the rotation axis thereof is parallel to the road surface. The above-described vertical load is applied to the tire 2 in a direction perpendicular to the road surface. In other words, the vertical load is applied to the tire 2 in a state where the camber angle of the tire 2 is set to 0°.

Although not described in detail, an image of the ground-contact surface formed when the tire 2 comes into contact with the flat surface is obtained by a known method. The contour of the ground-contact surface is specified on the basis of the obtained image.

The contour of the ground-contact surface, that is, the ground-contact surface shape of the ground-contact surface, is obtained by tracing the perimeter of the ground-contact surface in the image of the ground-contact surface.

In the present invention, a ground-contact surface obtained when the tire 2 is fitted onto the standardized rim, the internal pressure of the tire 2 is adjusted to 250 kPa, the camber angle of the tire 2 is set to 0 degrees, a vertical load is applied to the tire 2, and the tire 2 is brought into contact with a road surface composed of a flat surface, is the standard ground-contact surface. The vertical load applied to the tire 2 to obtain the standard ground-contact surface is not less than 60% and not greater than 80% of a load indicated by the load index of the tire 2.

In FIG. 3, a position indicated by each reference character SEs is a ground-contact end of the standard ground-contact surface. Of the two ground-contact ends SEs, the ground-contact end SEs located on the arrow ADe1 side is a first ground-contact end SEs1, and the ground-contact end SEs located on the arrow ADe2 side is a second ground-contact end SEs2. The first ground-contact end SEs1 side corresponds to the above-described first reference end Te1 side, and the second ground-contact end SEs2 side corresponds to the above-described second reference end Te2 side.

As shown in FIG. 3, the standard ground-contact surface includes a ground-contact surface corresponding to each land portion 32, specifically, ground-contact surfaces of the crown land portion 32c, the two middle land portions 32m, and the two shoulder land portions 32s. The space between the ground-contact surfaces corresponding to adjacent two land portions 32 corresponds to the circumferential groove 30. Therefore, the standard ground-contact surface includes the plurality of circumferential grooves 30, specifically, the two middle circumferential grooves 30m and the two shoulder circumferential grooves 30s.

The tread 4 includes a base layer 34 and a cap layer 36. The tread 4 of the tire 2 is composed of the base layer 34 and the cap layer 36 aligned in the radial direction.

As shown in FIG. 1, the base layer 34 is stacked on the band 22. The entire base layer 34 is covered with the cap layer 36. The base layer 34 is formed from a crosslinked rubber that has low heat generation properties.

The cap layer 36 is located radially outward of the base layer 34. The cap layer 36 includes the above-described tread surface 24. The cap layer 36 comes into contact with a road surface. The cap layer 36 is formed from a crosslinked rubber for which wear resistance and grip performance are taken into consideration.

In FIG. 1, a position indicated by reference character BE is an end of the base layer 34. A length indicated by a double-headed arrow WTB is the width of the base layer 34. The width WTB of the base layer 34 is the distance in the axial direction from one end BE to another end BE of the base layer 34. A position indicated by reference character CE is an end of the cap layer 36. A length indicated by a double-headed arrow WTC is the width of the cap layer 36. The width WTC of the cap layer 36 is the distance in the axial direction from one end CE to another end CE of the cap layer 36.

In the tire 2, each end CE of the cap layer 36 is located axially outward of the end BE of the base layer 34. The width WTC of the cap layer 36 is wider than the width WTB of the base layer 34.

Each end CE of the cap layer 36 is the end Te of the tread 4. The width of the tread 4 is represented as the width WTC of the cap layer 36.

In the tire 2, the cap layer 36 is harder than the base layer 34. Specifically, the hardness of the cap layer 36 is not less than 60 and not greater than 70, and the hardness of the base layer 34 is not less than 50 and not greater than 65. The difference between the hardness of the cap layer 36 and the hardness of the base layer 34 is not less than 10 and not greater than 20.

The temperature at which the loss tangent of the base layer 34 is measured is 70°C. The loss tangent at 70°C of the base layer 34 is not less than 0.02 and not greater than 0.10.

The temperature at which the loss tangent of the cap layer 36 is measured is 30°C. The loss tangent at 30°C of the cap layer 36 is not less than 0.12 and not greater than 0.40.

The loss tangent at 70°C of the base layer 34 is lower than the loss tangent at the 30°C of the cap layer 36. The ratio of the loss tangent at 30°C of the base layer 34 to the loss tangent at 70°C of the cap layer 36 is not less than 0.10 and not greater than 0.38.

Each sidewall 6 is located radially inward of the tread 4. The sidewall 6 is located axially outward of the carcass 14. The sidewall 6 includes the above-described maximum width position PW. The sidewall 6 is formed from a crosslinked rubber for which cut resistance is taken into consideration.

Each wing 8 is located between the tread 4 and the sidewall 6. The tread 4 and the sidewall 6 are joined via the wing 8. The wing 8 is formed from a crosslinked rubber for which adhesiveness is taken into consideration.

Each clinch 10 is located radially inward of the sidewall 6. The clinch 10 comes into contact with the rim R. The clinch 10 is formed from a crosslinked rubber for which wear resistance is taken into consideration.

Each bead 12 is located radially inward of the sidewall 6. The bead 12 is located axially inward of the clinch 10.

The bead 12 includes a core 38 and an apex 40. The core 38 extends in the circumferential direction. The core 38 includes a steel wire which is not shown. The apex 40 is located radially outward of the core 38. The apex 40 is tapered outward. The apex 40 is formed from a crosslinked rubber that has high stiffness.

The carcass 14 is located inward of the tread 4, the pair of sidewalls 6, and the pair of clinches 10. The carcass 14 extends on and between the pair of beads 12.

The carcass 14 includes at least one carcass ply 42. The carcass 14 of the tire 2 is composed of two carcass plies 42. On the radially inner side of the tread 4, the carcass ply 42 located on an inner surface 2N side of the tire 2 is a first carcass ply 44, and the carcass ply 42 located outward of the first carcass ply 44 is a second carcass ply 46.

As shown in FIG. 1, the two carcass plies 42 are turned up from the inner side to the outer side in the axial direction at the respective beads 12. Each end 44e of the first carcass ply 44 is located radially outward of the maximum width position PW. Each end 46e of the second carcass ply 46 is located between the apex 40 and the turned-up first carcass ply 44.

Each carcass ply 42 includes a large number of carcass cords aligned with each other, which are not shown. These carcass cords intersect the equator plane EL. The carcass 14 of the tire 2 has a radial structure. In the tire 2, a cord formed from an organic fiber is used as each carcass cord. Examples of the organic fiber include nylon fibers, rayon fibers, polyester fibers, and aramid fibers.

The inner liner 16 is located inward of the carcass 14. The inner liner 16 forms the inner surface 2N of the tire 2. The inner liner 16 is formed from a crosslinked rubber that has an excellent air blocking property. The inner liner 16 maintains the internal pressure of the tire 2.

Each chafer 18 is located radially inward of the bead 12. The chafer 18 comes into contact with the rim R. The chafer 18 of the tire 2 includes a fabric and a rubber with which the fabric is impregnated.

As shown in FIG. 1, the inner end of the chafer 18 forms a part of the tire inner surface 2N. The outer end of the chafer 18 is located radially outward of the inner end thereof. The outer end of the chafer 18 is located between the turned-up first carcass ply 44 and the clinch 10.

The belt 20 is located between the tread 4 and the carcass 14 in the radial direction. The belt 20 is stacked on the carcass 14.

The above-described equator plane EL intersects the belt 20 at the center of the width of the belt 20. Both ends 20e of the belt 20 are located so as to be opposed to each other across the equator plane EL.

The belt 20 includes a plurality of belt plies 48 aligned in the radial direction. Among the plurality of belt plies 48, the belt ply 48 located on the innermost side is an inner belt ply 50, and the belt ply 48 located on the outermost side is an outer belt ply 52. The belt 20 includes the inner belt ply 50 and the outer belt ply 52. The outer belt ply 52 is located radially outward of the inner belt ply 50.

The belt 20 of the tire 2 is composed of two belt plies 48. Specifically, the belt 20 is composed of the inner belt ply 50 and the outer belt ply 52.

The inner belt ply 50 is stacked on the carcass 14 on the radially inner side of the tread 4. The outer belt ply 52 is stacked on the inner belt ply 50.

In FIG. 1, a double-headed arrow WBU indicates the width of the inner belt ply 50. The width WBU of the inner belt ply 50 is the distance in the axial direction from one end 50e to another end 50e of the inner belt ply 50. A double-headed arrow WBS indicates the width of the outer belt ply 52. The width WBS of the outer belt ply 52 is the distance in the axial direction from one end 52e to another end 52e of the outer belt ply 52.

Each of the plurality of belt plies 48 included in the belt 20 includes a large number of belt cords aligned with each other, which are not shown. The belt cords are steel cords.

Each belt cord is inclined with respect to the equator plane EL. The direction of inclination of the belt cords included in the outer belt ply 52 is opposite to the direction of inclination of the belt cords included in the inner belt ply 50.

As shown in FIG. 1, each end 52e of the outer belt ply 52 is located axially inward of the end 50e of the inner belt ply 50. The length from the end 52e of the outer belt ply 52 to the end 50e of the inner belt ply 50 is not less than 3 mm and not greater than 10 mm.

The width WBS of the outer belt ply 52 is narrower than the width WBU of the inner belt ply 50. In other words, the inner belt ply 50 is the belt ply 48 having the widest width among the belt plies 48 included in the belt 20. The width of the belt 20 is represented as the width WBU of the wide inner belt ply 50. Each end 50e of the inner belt ply 50 is the end 20e of the belt 20.

In the tire 2, the width WBU of the inner belt ply 50, that is, the width WBU of the belt 20, is not less than 40% and not greater than 65% of the nominal cross-sectional width of the tire 2.

The band 22 is located between the tread 4 and the belt 20 in the radial direction. Each end 22e of the band 22 is located axially inward of the end Te of the tread 4. The entire band 22 is covered with the tread 4.

The band 22 is stacked on the belt 20. Each end 22e of the band 22 is located axially outward of the end 20e of the belt 20. The length from the end 20e of the belt 20 to the end 22e of the band 22 is not less than 3 mm and not greater than 7 mm.

The above-described equator plane EL intersects the band 22 at the center of the width of the band 22. Both ends 22e of the band 22 are located so as to be opposed to each other across the equator plane EL. The band 22 is a full band. The band 22 may be composed of a pair of edge bands that are placed so as to be spaced apart from each other in the axial direction with the equator plane EL interposed therebetween and are each formed so as to cover a portion of the belt 20 at the end 20e. The band 22 may be composed of a full band and a pair of edge bands.

The band 22 includes a helically wound band cord which is not shown. In the band 22, the band cord extends substantially in the circumferential direction. Specifically, an angle of the band cord with respect to the circumferential direction is not greater than 5°. The band 22 has a jointless structure. A cord formed from an organic fiber is used as the band cord. Examples of the organic fiber include nylon fibers, rayon fibers, polyester fibers, and aramid fibers.

As shown in FIG. 1, the base layer 34 and the cap layer 36 included in the tread 4 extend in a layer shape along the tread surface 24 in the meridian cross-section.

In the tire 2, the thickness of each layer included in the tread 4 is represented as a length along a normal line of the outer surface 2G of the tire 2 (specifically, the tread surface 24) in the meridian cross-section of the tire 2. This normal line is specified on the basis of the contour of the tread surface 24 and is also referred to as thickness reference line.

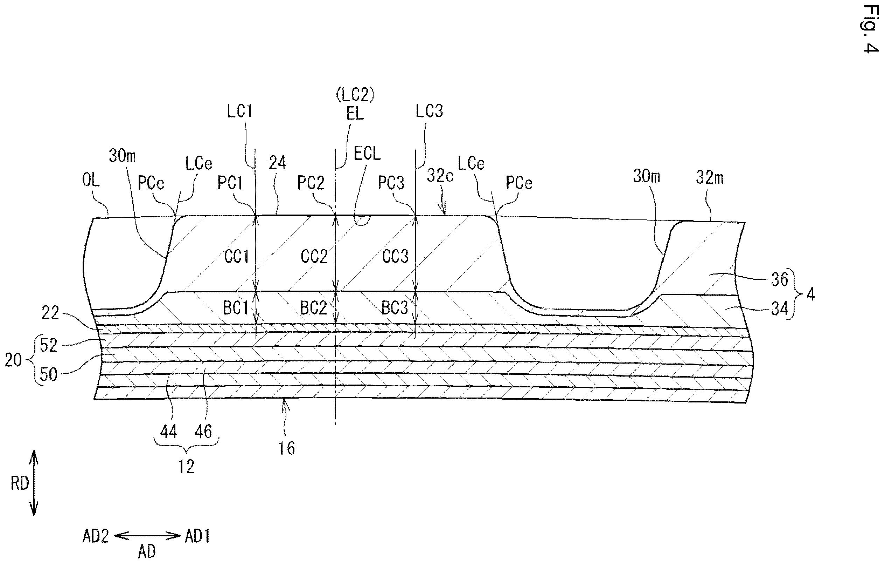

FIG. 4 shows a part of the tire 2 shown in FIG. 1. FIG. 4 shows a cross-section of the crown land portion 32c. A position indicated by each reference character PCe is an edge of the crown land portion 32c. The edge PCe is the point of intersection of an extension line of a land surface, that is, a contour OL of the tread surface 24, and an extension line LCe of a wall surface. A straight line ECL is a line segment connecting the edge PCe on the first reference end Te1 side and the edge PCe on the second reference end Te2 side of the crown land portion 32c.

In FIG. 4, straight lines LC1, LC2, and LC3 are thickness reference lines at the crown land portion 32c. Reference characters PC1, PC2, and PC3 indicate positions that divide the line segment ECL, which connects the edge PCe on the first reference end Te1 side and the edge PCe on the second reference end Te2 side of the crown land portion 32c, into four equal parts. The thickness reference line LC1 passes through the position PC1, the thickness reference line LC2 passes through the position PC2, and the thickness reference line LC3 passes through the position PC3. The thickness reference line LC2 of the tire 2 coincides with the equator plane EL.

A length indicated by a double-headed arrow CC1 along the thickness reference line LC1 is the thickness of the cap layer 36 at the position PC1. A length indicated by a double-headed arrow BC1 is the thickness of the base layer 34 at the position PC1. A ratio CC1BC1 of the thickness CC1 of the cap layer 36 to the thickness BC1 of the base layer 34 is a cap layer thickness ratio ARc1 at the position PC1.

A length indicated by a double-headed arrow CC2 along the thickness reference line LC2 is the thickness of the cap layer 36 at the position PC2. A length indicated by a double-headed arrow BC2 is the thickness of the base layer 34 at the position PC2. A ratio CC2/BC2 of the thickness CC2 of the cap layer 36 to the thickness BC2 of the base layer 34 is a cap layer thickness ratio ARc2 at the position PC2.

A length indicated by a double-headed arrow CC3 along the thickness reference line LC3 is the thickness of the cap layer 36 at the position PC3. A length indicated by a double-headed arrow BC3 is the thickness of the base layer 34 at the position PC3. A ratio CC3/BC3 of the thickness CC3 of the cap layer 36 to the thickness BC3 of the base layer 34 is a cap layer thickness ratio ARc3 at the position PC3.

In the tire 2, a proportion ARc of the cap layer 36 occupying the crown land portion 32c is represented as the average value of a ratio CCBC of a cap layer thickness CC to a base layer thickness BC in the crown land portion 32c. Specifically, the cap layer proportion ARc is represented as the average value of the cap layer thickness ratio CC1/BC1 at the position PC1, the cap layer thickness ratio CC2/BC2 at the position PC2, and the cap layer thickness ratio CC3/BC3 at the position PC3.

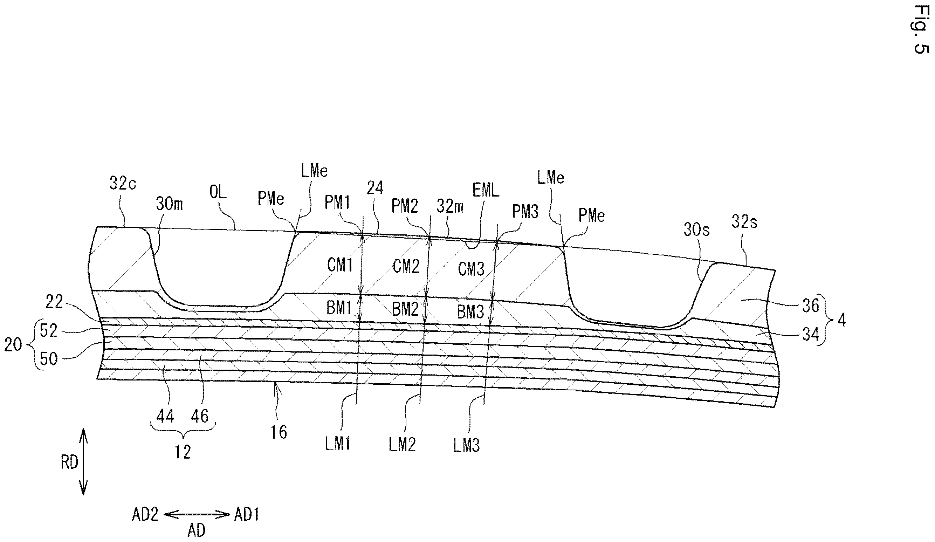

FIG. 5 shows a part of the tire 2 shown in FIG. 1. FIG. 5 shows a cross-section of the middle land portion 32m. A position indicated by each reference character PMe is an edge of the middle land portion 32m. The edge PMe is the point of intersection of an extension line of a land surface, that is, the contour OL of the tread surface 24, and an extension line LMe of a wall surface. A straight line EML is a line segment connecting the edge PMe on the equator plane EL side of the middle land portion 32m and the edge PMe on the end Te side of the tread 4.

In FIG. 5, straight lines LM1, LM2, and LM3 are thickness reference lines at the middle land portion 32m. Reference characters PM1, PM2, and PM3 indicate positions that divide the line segment EMI,, which connects the edge PMe on the equator plane EL side of the middle land portion 32m and the edge PMe on the end Te side of the tread 4, into four equal parts. The thickness reference line LM1 passes through the position PM1, the thickness reference line LM2 passes through the position PM2, and the thickness reference line LM3 passes through the position PM3.

A length indicated by a double-headed arrow CM1 along the thickness reference line LM1 is the thickness of the cap layer 36 at the position PM1. A length indicated by a double-headed arrow BM1 is the thickness of the base layer 34 at the position PM1. A ratio CM1BM1 of the thickness CM1 of the cap layer 36 to the thickness BM1 of the base layer 34 is a cap layer thickness ratio ARm1 at the position PM1.

A length indicated by a double-headed arrow CM2 along the thickness reference line LM2 is the thickness of the cap layer 36 at the position PM2. A length indicated by a double-headed arrow BM2 is the thickness of the base layer 34 at the position PM2. A ratio CM2BM2 of the thickness CM2 of the cap layer 36 to the thickness BM2 of the base layer 34 is a cap layer thickness ratio ARm2 at the position PM2.

A length indicated by a double-headed arrow CM3 along the thickness reference line LM3 is the thickness of the cap layer 36 at the position PM3. A length indicated by a double-headed arrow BM3 is the thickness of the base layer 34 at the position PM3. A ratio CM3BM3 of the thickness CM3 of the cap layer 36 to the thickness BM3 of the base layer 34 is a cap layer thickness ratio ARm3 at the position PM3.

In the tire 2, a proportion ARm of the cap layer 36 occupying the middle land portion 32m is represented as the average value of a ratio CMBM of a cap layer thickness CM to a base layer thickness BM in the middle land portion 32m. Specifically, the cap layer proportion ARm is represented as the average value of the cap layer thickness ratio CM1BM1 at the position PM1, the cap layer thickness ratio CM2/BM2 at the position PM2, and the cap layer thickness ratio CM3/BM3 at the position PM3.

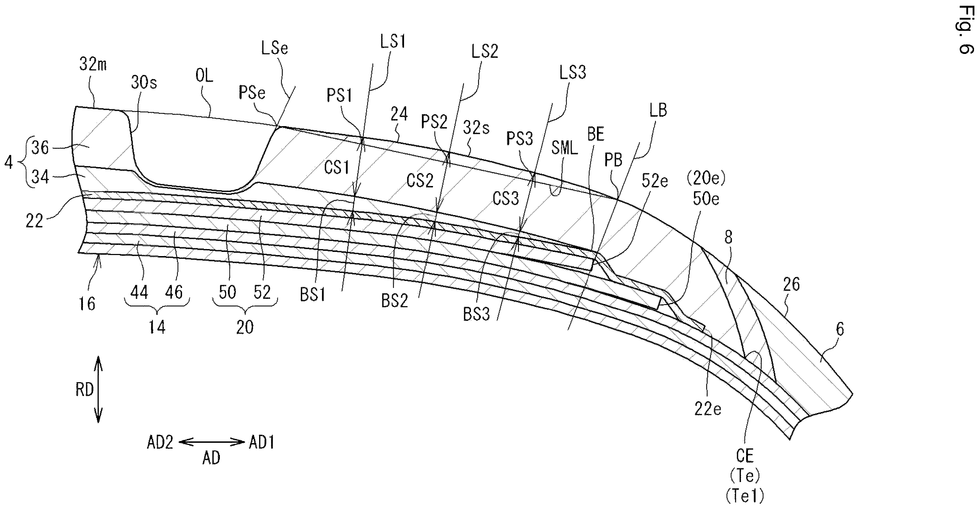

FIG. 6 shows a part of the tire 2 shown in FIG. 1. FIG. 6 shows a cross-section of the shoulder land portion 32s. A position indicated by reference character PSe is an edge of the shoulder land portion 32s. The edge PSe is the point of intersection of an extension line of a land surface, that is, the contour OL of the tread surface 24, and an extension line LSe of a wall surface. A straight line LB is a normal line of the tread surface 24 that passes through the end 52e of the outer belt ply 52. A position indicated by reference character PB is the point of intersection of the normal line LB and the tread surface 24. The point of intersection PB is a reference position that defines the thicknesses of the cap layer 36 and the base layer 34 in the shoulder land portion 32s. A straight line SML is a line segment connecting the edge PSe of the shoulder land portion 32s and the reference position PB.

In FIG. 6, straight lines LS1, LS2, and LS3 are thickness reference lines at the shoulder land portion 32s. Reference characters PS1, PS2, and PS3 indicate positions that divide the line segment SML, which connects the edge PSe of the shoulder land portion 32s and the reference position PB, into four equal parts. The thickness reference line LS1 passes through the position PS1, the thickness reference line LS2 passes through the position PS2, and the thickness reference line LS3 passes through the position PS3.

A length indicated by a double-headed arrow CS1 along the thickness reference line LS1 is the thickness of the cap layer 36 at the position PS1. A length indicated by a double-headed arrow BS1 is the thickness of the base layer 34 at the position PS1. A ratio CS1BS1 of the thickness CS1 of the cap layer 36 to the thickness BS1 of the base layer 34 is a cap layer thickness ratio ARs1 at the position PS1.

A length indicated by a double-headed arrow CS2 along the thickness reference line LS2 is the thickness of the cap layer 36 at the position PS2. A length indicated by a double-headed arrow BS2 is the thickness of the base layer 34 at the position PS2. A ratio CS2BS2 of the thickness CS2 of the cap layer 36 to the thickness BS2 of the base layer 34 is a cap layer thickness ratio ARs2 at the position PS2.

A length indicated by a double-headed arrow CS3 along the thickness reference line LS3 is the thickness of the cap layer 36 at the position PS3. A length indicated by a double-headed arrow BS3 is the thickness of the base layer 34 at the position PS3. A ratio CS3/BS3 of the thickness CS3 of the cap layer 36 to the thickness BS3 of the base layer 34 is a cap layer thickness ratio ARs3 at the position PS3.

In the tire 2, a proportion ARs of the cap layer 36 occupying the shoulder land portion 32s is represented as the average value of a ratio CSBS of a cap layer thickness CS to a base layer thickness BS in the shoulder land portion 32s. Specifically, the cap layer proportion ARs is represented as the average value of the cap layer thickness ratio CS1/BS1 at the position PS1, the cap layer thickness ratio CS2BS2 at the position PS2, and the cap layer thickness ratio CS3/BS3 at the position PS3.

In the tire 2, each end BE of the base layer 34 is located axially inward of the end 20e of the belt 20. In the tire 2, the cap layer 36 covering a portion of the base layer 34 at the end BE thereof is thicker than in the conventional tires. In each shoulder portion, the base layer 34 is less likely to be exposed. During limit running in which a large load acts on the shoulder portion, the tread 4 is less likely to peel off.

In the tire 2, the proportion ARs of the cap layer 36 occupying the shoulder land portion 32s is higher than that in the conventional tires. In other words, the proportion of the base layer 34 occupying the shoulder land portion 32s is low. The cap layer 36 is harder and more likely to generate heat than the base layer 34. Therefore, there is a concern that rolling resistance may increase, ride comfort may decrease, and road noise may increase, decreasing quietness.

However, in the tire 2, the cap layer proportion ARc of the crown land portion 32c is not less than 1.5 and not greater than 3.5, the cap layer proportion ARm of the middle land portion 32m is equal to or higher than the cap layer proportion ARc of the crown land portion 32c, and the cap layer proportion ARs of the shoulder land portion 32s is higher than the cap layer proportion ARm of the middle land portion 32m and not less than 5.0 and not greater than 9.5. In other words, the proportion of the base layer 34 occupying the land portion 32 is lower in the shoulder land portion 32s and higher in the crown land portion 32c and the middle land portion 32m. The base layer 34 is softer and less likely to generate heat than the cap layer 36. The crown land portion 32c and the middle land portion 32m having a higher base layer proportion can contribute to suppressing an increase in rolling resistance, a decrease in ride comfort, and a decrease in quietness.

The tire 2 can suppress occurrence of tread peeling while suppressing an increase in rolling resistance, a decrease in ride comfort, and a decrease in quietness.

From the viewpoint that the tire 2 can effectively suppress occurrence of tread peeling while suppressing an increase in rolling resistance, a decrease in ride comfort, and a decrease in quietness, it is preferable that the cap layer proportion ARc of the crown land portion 32c is not less than 2.0 and not greater than 3.0. From the same viewpoint, it is preferable that the cap layer proportion ARm of the middle land portion 32m is equal to the cap layer proportion ARc of the crown land portion 32c. From the same viewpoint, it is preferable that the cap layer proportion ARs of the shoulder land portion 32s is not less than 7.0 and not greater than 9.0. It is more preferable that the cap layer proportion ARc of the crown land portion 32c is not less than 2.0 and not greater than 3.0, the cap layer proportion ARm of the middle land portion 32m is equal to the cap layer proportion ARc of the crown land portion 32c, and the cap layer proportion ARs of the shoulder land portion 32s is not less than 7.0 and not greater than 9.0.

For example, as shown in FIG. 1, each end CE of the cap layer 36 is located axially outward of the end 50e of the inner belt ply 50, that is, the end 20e of the belt 20. The position of each end CE of the cap layer 36 may coincide with the position of the end 20e of the belt 20 in the axial direction. As described above, each end BE of the base layer 34 is located axially inward of the end 20e of the belt 20. Each end BE of the base layer 34 is covered with the cap layer 36 having a sufficient thickness. In each shoulder portion, the base layer 34 is less likely to be exposed. During limit running in which a large load acts on the shoulder portion, the tread 4 is less likely to peel off. The tire 2 can effectively suppress occurrence of tread peeling. From this viewpoint, it is preferable that the position of each end CE of the cap layer 36 coincides with the position of the end 20e of the belt 20 in the axial direction, or each end CE of the cap layer 36 is located axially outward of the end 20e of the belt 20, and it is more preferable that each end CE of the cap layer 36 is located axially outward of the end 20e of the belt 20.

From the same viewpoint, a ratio WTC/WBU of the width WTC of the cap layer 36 to the width WBU of the belt 20 is preferably not less than 100% and more preferably not less than 103%. From the viewpoint of appropriately maintaining the volume of the cap layer 36 included in the shoulder land portion 32s and effectively suppressing the influence of the cap layer 36 included in the shoulder land portion 32s on ride comfort and quietness, the ratio WTC/WBU is preferably not greater than 110% and more preferably not greater than 107%.

As described above, each end BE of the base layer 34 is located axially inward of the end 20e of the belt 20. In the tire 2, each end BE of the base layer 34 is preferably located near the end 52e of the outer belt ply 52. Specifically, a ratio WTB/WBS of the width WTB of the base layer 34 to the width WBS of the outer belt ply 52 is preferably not less than 90% and not greater than 110%.

When the ratio WTB/WBS is set to be not less than 90%, the base layer 34 can effectively contribute to reduction of rolling resistance. In addition, in the shoulder land portion 32s, the base layer 34 can contribute to suppressing a decrease in responsiveness, ride comfort, and quietness. From these viewpoints, the ratio WTB/WBS is more preferably not less than 95% and further preferably not less than 98%.

When the ratio WTB/WBS is set to be not greater than 110%, each end BE of the base layer 34 is covered with the cap layer 36 having a sufficient thickness. The tire 2 can effectively suppress occurrence of tread peeling. From this viewpoint, the ratio WTB/WBS is more preferably not greater than 105% and further preferably not greater than 102%.

For example, as shown in FIG. 6, the base layer 34 is tapered outward in the axial direction in the shoulder land portion 32s. Each end BE of the base layer 34 is covered with the cap layer 36 having a sufficient thickness. In each shoulder portion, the base layer 34 is less likely to be exposed. During limit running in which a large load acts on the shoulder portion, the tread 4 is less likely to peel off. The tire 2 can effectively suppress occurrence of tread peeling. From this viewpoint, it is preferable that the base layer 34 is tapered outward in the axial direction in the shoulder land portion 32s.

From the same viewpoint, the cap layer thickness ratio ARs3 at the position PS3 is preferably not greater than 0.4 times and more preferably not greater than 0.3 times the cap layer thickness ratio ARs 1 at the position PS 1. From the viewpoint that the base layer 34 can contribute to reduction of rolling resistance, the cap layer thickness ratio ARs3 at the position PS3 is preferably not less than 0.1 times and more preferably not less than 0.2 times the cap layer thickness ratio ARs1 at the position PS1.

In FIG. 3, a length indicated by a double-headed arrow CW is the ground-contact width of the standard ground-contact surface. The ground-contact width CW is represented as the distance in the axial direction from the first ground-contact end SEs1 to the second ground-contact end SEs2. An alternate long and short dash line LPs is a ground-contact width center line of the standard ground-contact surface. A length indicated by a double-headed arrow CG, that is, the length of a line of intersection of the standard ground-contact surface and the ground-contact width center line LPs, is the ground-contact length at the ground-contact width center of the standard ground-contact surface.

In the tire 2, the ground-contact width CW of the standard ground-contact surface is preferably not less than 70% and not greater than 80% of the nominal cross-sectional width of the tire 2. Accordingly, the tire 2 can come into contact with a road surface over a sufficiently wide area. The tire 2 effectively suppresses a decrease in responsiveness due to the increase of the base layer proportion in the crown land portion 32c and the middle land portion 32m. The tire 2 can maintain good steering stability.

In FIG. 3, each double-headed arrow WGM indicates the groove width of the middle circumferential groove 30m in the standard ground-contact surface. Each double-headed arrow WGS indicates the groove width of the shoulder circumferential groove 30s in the standard ground-contact surface.

A solid line LA is a straight line that passes through the center of the ground-contact length CG and extends in the axial direction. The groove width WGM and the groove width WGS are measured along the straight line LA.

In the tire 2, the sum of the groove widths of the plurality of circumferential grooves 30 included in the standard ground-contact surface, that is, a sum WGT of the groove widths WGM of the two middle circumferential grooves 30m and the groove widths WGS of the two shoulder circumferential grooves 30s included in the standard ground-contact surface, is adjusted. Specifically, the ratio (WGT/CW) of the sum WGT of the groove widths of the plurality of circumferential grooves 30 included in the standard ground-contact surface to the ground-contact width CW of the standard ground-contact surface is preferably not less than 20% and not greater than 30%. Accordingly, in the tire 2, responsiveness, ride comfort, and quietness are well balanced. From this viewpoint, the ratio (WGT/CW) is more preferably not less than 22% and not greater than 28% and further preferably not less than 24% and not greater than 26%.

From the viewpoint that the tire 2 can suppress occurrence of tread peeling while suppressing an increase in rolling resistance, a decrease in responsiveness, a decrease in ride comfort, and a decrease in quietness, it is more preferable that the ground-contact width CW of the standard ground-contact surface is not less than 70% and not greater than 80% of the nominal cross-sectional width of the tire 2, and the ratio (WGT/CW) of the sum WGT of the groove widths of the plurality of circumferential grooves 30 included in the standard ground-contact surface to the ground-contact width CW of the standard ground-contact surface is not less than 20% and not greater than 30%.

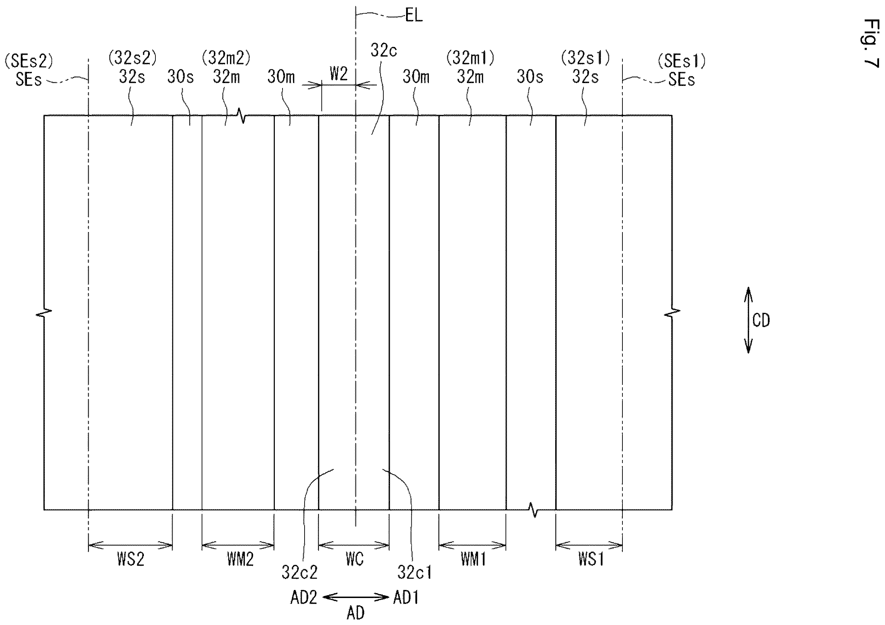

FIG. 7 shows a modification of the tread pattern. In FIG. 7 as well, as in FIG. 2, for convenience of description, only the four circumferential grooves 30 are shown as the grooves 28 which form the tread pattern. In FIG. 7, a direction indicated by an arrow AD1 corresponds to the first reference end Te1 side, and a direction indicated by an arrow AD2 corresponds to the second reference end Te2 side.

In this tread pattern, the four circumferential grooves 30 are arranged asymmetrically with respect to the equator plane EL. Therefore, the five land portions 32 are also arranged asymmetrically with respect to the equator plane EL.

In the tread pattern shown in FIG. 7, the width WC of the crown land portion 32c is taken into consideration. Specifically, the crown land portion 32c is formed so as to have a width WC wider than the width WC of the crown land portion 32c shown in FIG. 2. Accordingly, in a vehicle on which the tire 2 is mounted, a high cornering force is generated at each front tire. The tire 2 can contribute to suppression of a response delay of the front tire. The tire 2 can effectively suppress an increase in rolling resistance and occurrence of tread peeling while suppressing a decrease in responsiveness. From this viewpoint, a ratio WC/CW of the width WC of the crown land portion 32c to the ground-contact width CW of the standard ground-contact surface is preferably not less than 14%.

The ratio WC/CW is preferably not greater than 16%. Accordingly, in a vehicle on which the tire 2 is mounted, a high cornering force is generated in a well-balanced manner at each front tire and each rear tire. The tire 2 can contribute to improvement of linearity.

In the tire 2, the middle land portion 32m on the first reference end Te1 side (hereinafter referred to as first middle land portion 32ml) has a width WM1 substantially equal to the width WS1 of the shoulder land portion 32s on the first reference end Te1 side (hereinafter referred to as first shoulder land portion 32s1). The crown land portion 32c has a width WC substantially equal to the width WM1 of the first middle land portion 32m1, or has a width WC wider than the width WM1. The middle land portion 32m on the second reference end Te2 side (hereinafter referred to as second middle land portion 32m2) has a width WM2 substantially equal to the width WC of the crown land portion 32c, or has a width WM2 wider than the width WC. The shoulder land portion 32s on the second reference end Te2 side (hereinafter referred to as second shoulder land portion 32s2) has a width WS2 wider than the width WM2 of the second middle land portion 32m2. By adopting the tread pattern in FIG. 7, the ratio of a cornering force at each rear tire to a cornering force at each front tire is effectively increased compared to the conventional tires. When the tire 2 is mounted on a vehicle, linearity is improved. The tire 2 can effectively suppress an increase in rolling resistance and occurrence of tread peeling while improving linearity, that is, while improving the steering stability of the vehicle.

The width WS1 of the first shoulder land portion 32s1 is preferably not less than 90% and not greater than 100% of the width WC of the crown land portion 32c.

When the width WS1 is set to be not less than 90% of the width WC, the crown land portion 32c, the first middle land portion 32m1, and the second middle land portion 32m2 can be formed with appropriate widths in the tire 2. When the tire 2 is mounted on a vehicle, a high cornering force is generated in a well-balanced manner at each front tire and each rear tire, so that linearity is improved.

When the width WS1 is set to be not greater than 100% of the width WC, the crown land portion 32c, the first middle land portion 32m1, and the second middle land portion 32m2 can be formed with appropriate widths in the tire 2. When the tire 2 is mounted on a vehicle, a high cornering force is generated at each front tire, so that a response delay of the front tire is suppressed.

The width WM1 of the first middle land portion 32m1 is preferably not less than 90% and not greater than 100% of the width WC of the crown land portion 32c.

When the width WM1 is set to be not less than 90% of the width WC, a high cornering force is generated at each front tire when the tire 2 is mounted on a vehicle. The tire 2 can contribute to suppression of a response delay of the front tire.

When the width WM1 is set to be not greater than 100% of the width WC, a high cornering force is generated in a well-balanced manner at each front tire and each rear tire when the tire 2 is mounted on a vehicle. The tire 2 can contribute to improvement of linearity.

The width WM2 of the second middle land portion 32m2 is preferably not less than 97% and not greater than 107% of the width WC of the crown land portion 32c.

When the width WM2 is set to be not less than 97% of the width WC, a high cornering force is generated at each front tire when the tire 2 is mounted on a vehicle. The tire 2 can contribute to suppression of a response delay of the front tire.

When the width WM2 is set to be not greater than 107% of the width WC, a high cornering force is generated in a well-balanced manner at each front tire and each rear tire when the tire 2 is mounted on a vehicle. The tire 2 can contribute to improvement of linearity.

The width WS2 of the second shoulder land portion 32s2 is preferably not less than 114% and not greater than 124% of the width WC of the crown land portion 32c.

When the width WS2 is set to be not less than 114% of the width WC, the crown land portion 32c, the first middle land portion 32m1, and the second middle land portion 32m2 can be formed with appropriate widths in the tire 2. When the tire 2 is mounted on a vehicle, a high cornering force is generated in a well-balanced manner at each front tire and each rear tire, so that linearity is improved.

When the width WS2 is set to be not greater than 124% of the width WC, the crown land portion 32c, the first middle land portion 32m1, and the second middle land portion 32m2 can be formed with appropriate widths in the tire 2. When the tire 2 is mounted on a vehicle, a high cornering force is generated at each front tire, so that a response delay of the front tire is suppressed.

In the crown land portion 32c shown in FIG. 7, the width center thereof is located on the second reference end Te2 side with respect to the equator plane EL. That is, when the crown land portion 32c is divided into a first portion 32c1 on the first reference end Te1 side and a second portion 32c2 on the second reference end Te2 side by the equator plane EL, the width of the second portion 32c2 is wider than the width of the first portion 32c1. Accordingly, the tire 2 can effectively increase the ratio of a cornering force at each rear tire to a cornering force at each front tire while effectively increasing the cornering force generated at each front tire. The tire 2 can effectively suppress an increase in rolling resistance and occurrence of tread peeling while improving responsiveness and linearity.

In FIG. 7, a double-headed arrow W2 indicates the width of the second portion 32c2. The width W2 is represented as the distance in the axial direction from the equator plane EL to the edge on the second reference end Te2 side of the crown land portion 32c.

From the viewpoint that the tire 2 can effectively suppress an increase in rolling resistance and occurrence of tread peeling while improving responsiveness and linearity, the ratio (W2/WC) of the width W2 of the second portion 32c2 to the width WC of the crown land portion 32c is preferably not less than 51% and not greater than 55%.

From the viewpoint that the tire 2 can effectively suppress an increase in rolling resistance and occurrence of tread peeling while improving responsiveness and linearity, in the case where the tread pattern of the tire 2 includes four circumferential grooves 30 and five land portions 32 are formed in the tread 4, it is preferable that the ratio WC/CW of the width WC of the crown land portion 32c to the ground-contact width CW of the standard ground-contact surface is not less than 14% and not greater than 16%. In this case, it is more preferable that the width WS1 of the shoulder land portion 32s1 on the first reference end Te1 side is not less than 90% and not greater than 100% of the width WC of the crown land portion 32c, the width WM1 of the middle land portion 32m1 on the first reference end Te1 side is not less than 90% and not greater than 100% of the width WC of the crown land portion 32c, the width WM2 of the middle land portion 32m2 on the second reference end Te2 side is not less than 97% and not greater than 107% of the width WC of the crown land portion 32c, the width WS2 of the shoulder land portion 32s2 on the second reference end Te2 side is not less than 114% and not greater than 124% of the width WC of the crown land portion 32c, and the ratio (W2/WC) of the width W2 of the second portion 32c2 of the crown land portion 32c to the width WC of the crown land portion 32c is not less than 51% and not greater than 55%. In particular, in the case where the ground-contact width CW of the standard ground-contact surface is not less than 70% and not greater than 80% of the nominal cross-sectional width of the tire 2 and the ratio (WGT/CW) of the sum WGT of the groove widths of the plurality of circumferential grooves 30 included in the standard ground-contact surface to the ground-contact width CW of the standard ground-contact surface is not less than 20% and not greater than 30%, the tread pattern shown in FIG. 7 can more effectively contribute to improvement of responsiveness and linearity. The tire 2 can effectively suppress an increase in rolling resistance and occurrence of tread peeling while improving responsiveness and linearity.

As is obvious from the above description, according to the present invention, a tire that can suppress occurrence of tread peeling while suppressing an increase in rolling resistance, is obtained. In particular, the present invention exhibits a remarkable effect in a tire that has a nominal cross-sectional width of not less than 215 mm and not greater than 325 mm and a load index (LI) of not less than 90.

### EXAMPLES

Hereinafter, the present invention will be described in further detail by means of examples, etc., but the present invention is not limited to these examples.

### [Example 1]

A tire (tire size = 245/50R19) having the basic structure shown in FIG. 1 and having specifications shown in Table 1 below was obtained.

As shown in FIG. 6, each end of the base layer was located near the end of the outer belt ply. This is represented as "FIG. 6" in the cell for "CAPBASE structure" in Table 1 below.

The ratio WTB/WBS of the width WTB of the base layer to the width WBS of the outer belt ply was 100%.

The cap layer proportion ARc of the crown land portion, the cap layer proportion ARm of the middle land portion, and the cap layer proportion ARs of the shoulder land portion are as shown in Table 1 below.

The four circumferential grooves provided on the tread were arranged as shown in FIG. 2. This is represented as "FIG. 2" in the cell for "Tread pattern" in Table 1 below.

The ratio WGT/CW of the sum WGT of the groove widths of the plurality of circumferential grooves included in the standard ground-contact surface to the ground-contact width CW of the standard ground-contact surface, the ratio WS2/WC of the width WS2 of the second shoulder land portion to the width WC of the crown land portion, the ratio WM2/WC of the width WM2 of the second middle land portion to the width WC of the crown land portion, the ratio WM1/WC of the width WM1 of the first middle land portion to the width WC of the crown land portion, the ratio WS1/WC of the width WS1 of the first shoulder land portion to the width WC of the crown land portion, the ratio W2/WC of the width W2 of the second portion of the crown land portion to the width WC of the crown land portion, and the ratio WC/CW of the width WC of the crown land portion to the ground-contact width CW of the standard ground-contact surface are as shown in Table 1 below.

### [Comparative Examples 1 and 2]

Tires of Comparative Examples 1 and 2 are conventional tires (tire size = 245/50R19). The specifications of the tires of Comparative Examples 1 and 2 are as shown in Table 1 below.

### [Example 2]

A tire of Example 2 was obtained in the same manner as Example 1, except that the arrangement of the circumferential grooves was changed as shown in FIG. 7, and the ratio WGT/CW, the ratio WS2/WC, the ratio WM2/WC, the ratio WM1/WC, the ratio WS1/WC, the ratio W2/WC, and the ratio WC/CW were set as shown in Table 1 below.

### [Example 3]

A tire of Example 3 was obtained in the same manner as Example 2, except that the ratio WTB/WBS was set as shown in Table 1 below.

### [Comparative Examples 3 and 4]

Tires of Comparative Examples 3 and 4 were obtained in the same manner as Example 2, except that the cap layer proportion ARc of the crown land portion was set as shown in Table 1 below.

### [Example 4 and Comparative Example 5]

Tires of Example 4 and Comparative Example 5 were obtained in the same manner as Example 2, except that the cap layer proportion ARm of the middle land portion was set as shown in Table 2 below.

### [Comparative Examples 6 and 7]

Tires of Comparative Examples 6 and 7 were obtained in the same manner as Example 2, except that the cap layer proportion ARs of the shoulder land portion was set as shown in Table 2 below.

### [Examples 5 to 12]

Tires of Examples 5 to 12 were obtained in the same manner as Example 1, except that the ratio WS2/WC, the ratio WM2/WC, the ratio WM1/WC, the ratio WS1/WC, and the ratio WC/CW were set as shown in Tables 2 and 3 below.

### [Rolling Resistance (RRC)]

Using a rolling resistance testing machine, a rolling resistance coefficient (RRC) was measured when a test tire ran on a drum at a speed of 80 km/h under the following conditions. The results are shown in the cells for "RRC" in Tables 1 to 3 below as indexes with the result of Comparative Example 1 being regarded as 100. The higher the value is, the lower the rolling resistance of the tire is.
Rim: 7.5 inches
Internal pressure: 250 kPa
Vertical load: 7.26 kN

### [Running Test]

Test tires were fitted onto rims (size = 7.5 inches) and inflated with air to adjust the internal pressures of the tires to 250 kPa. The tires were mounted to a test vehicle (passenger car). The test vehicle was driven on a test course with a dry road surface, and sensory evaluation was performed for responsiveness and ride comfort. The results are shown in the cells for "Responsiveness" and "Ride comfort" in Tables 1 to 3 below as indexes with the result of Comparative Example 1 being regarded as 100. The higher the value is, the more a decrease in responsiveness or ride comfort is suppressed and the better the result is.

### [Durability]

For each tire that had undergone the above-described running test, the appearance was observed to check the state of occurrence of tread peeling, and the size (area) of a portion where peeling occurred was obtained. The results are shown in the cells for "Durability" in Tables 1 to 3 below as indexes with the result of Comparative Example 1 being regarded as 100. The higher the value is, the more tread peeling is suppressed.

### [Quietness (Road Noise: R/N)]

Test tires were fitted onto rims (size = 7.5 inches) and inflated with air to adjust the internal pressures of the tires to 250 kPa. The tires were mounted to a test vehicle (front-wheel-drive passenger car having an engine displacement of 2000 cc). The sound pressure level of cavity resonance sound (road noise) when the test vehicle was driven at 30 km/h on a test course with a dry road surface was measured using a microphone installed at an ear position of the driver's seat on the window side. The results are shown in the cells for "R/N" in Tables 1 to 3 below as indexes with the result of Comparative Example 1 being regarded as 100. The higher the value is, the better the result is. The cavity resonance sound is a peak value around 240 Hz.

### [Quietness (Pattern Noise: P/N)]

Test tires were fitted onto rims (rim width = 7.5 inches) and inflated with air to adjust the internal pressures of the tires to 250 kPa. The tires were mounted to a test vehicle (front-wheel-drive passenger car having an engine displacement of 2000 cc). Sensory evaluation was performed for whooshing noise when the test vehicle was driven at 100 km/h on a test course with a dry road surface. The results are shown in the cells for "P/N" in Tables 1 to 3 below as indexes with the result of Comparative Example 1 being regarded as 100. The higher the value is, the better the result is.

### [Combined Performance]

The total of the index values obtained in the respective evaluations was calculated. The results are shown in the cells for "Combined" in Tables 1 to 3 below. The higher the value is, the better the performance is.

**[Table 1]**

| | Comp. Ex. 1 | Comp. Ex. 2 | Ex. 1 | Ex. 2 | Ex. 3 | Comp. Ex. 3 | Comp. Ex. 4 |
|---|---|---|---|---|---|---|---|
| CAPBASE structure | FIG. 8 | FIG. 9 | FIG. 6 | FIG. 6 | FIG. 6 | FIG. 6 | FIG. 6 |
| WTB/WBS [%] | 115 | 107 | 100 | 100 | 85 | 100 | 100 |
| ARc [%] | 4.0 | 4.0 | 2.3 | 2.3 | 2.3 | 1.0 | 5.0 |
| ARm [%] | 4.0 | 4.0 | 2.3 | 2.3 | 2.3 | 2.3 | 2.3 |
| ARs [%] | 4.0 | 4.0 | 9.0 | 9.0 | 9.0 | 9.0 | 9.0 |
| Tread pattern | FIG. 2 | FIG. 2 | FIG. 2 | FIG. 7 | FIG. 7 | FIG. 7 | FIG. 7 |
| WGT/CW [%] | 23 | 23 | 23 | 25 | 25 | 25 | 25 |
| WS2/WC [%] | 140 | 140 | 140 | 119 | 119 | 119 | 119 |
| WM2/WC [%] | 125 | 125 | 125 | 102 | 102 | 102 | 102 |
| WM1/WC [%] | 125 | 125 | 125 | 95 | 95 | 95 | 95 |
| WS1/WC [%] | 140 | 140 | 140 | 95 | 95 | 95 | 95 |
| W2/WC [%] | 50 | 50 | 50 | 53 | 53 | 53 | 53 |
| WC/CW [%] | 12.2 | 12.2 | 12.2 | 14.7 | 14.7 | 14.7 | 14.7 |
| RRC | 100 | 98 | 98 | 98 | 97 | 102 | 97 |
| Durability | 100 | 110 | 115 | 115 | 120 | 115 | 115 |
| Responsiveness | 100 | 110 | 98 | 100 | 120 | 80 | 107 |
| Ride comfort | 100 | 90 | 95 | 100 | 85 | 105 | 95 |
| R/N | 100 | 95 | 100 | 100 | 90 | 105 | 95 |
| P/N | 100 | 95 | 100 | 100 | 90 | 105 | 95 |
| Combined | 600 | 598 | 606 | 613 | 602 | 612 | 604 |

**[Table 2]**

| | Comp. Ex. 5 | Ex. 4 | Comp. Ex. 6 | Comp. Ex. 7 | Ex. 5 | Ex. 6 |
|---|---|---|---|---|---|---|
| CAP/BASE structure | FIG. 6 | FIG. 6 | FIG. 6 | FIG. 6 | FIG. 6 | FIG. 6 |
| WTB/WBS [%] | 100 | 100 | 100 | 100 | 100 | 100 |
| ARc [%] | 2.3 | 2.3 | 2.3 | 2.3 | 2.3 | 2.3 |
| ARm [%] | 1.0 | 5.0 | 2.3 | 2.3 | 2.3 | 2.3 |
| ARs [%] | 9.0 | 9.0 | 3.0 | 10.0 | 9.0 | 9.0 |
| Tread pattern | FIG. 7 | FIG. 7 | FIG. 7 | FIG. 7 | FIG. 7 | FIG. 7 |
| WGT/CW [%] | 25 | 25 | 25 | 25 | 25 | 25 |
| WS2/WC [%] | 119 | 119 | 119 | 119 | 125 | 113 |
| WM2/WC [%] | 102 | 102 | 102 | 102 | 102 | 102 |
| WM1/WC [%] | 95 | 95 | 95 | 95 | 95 | 95 |
| WS1/WC [%] | 95 | 95 | 95 | 95 | 95 | 95 |
| W2/WC [%] | 53 | 53 | 53 | 53 | 53 | 53 |
| WC/CW [%] | 14.7 | 14.7 | 14.7 | 14.7 | 14.5 | 14.9 |
| RRC | 102 | 97 | 102 | 96 | 98 | 98 |
| Durability | 115 | 115 | 115 | 115 | 115 | 115 |
| Responsiveness | 85 | 105 | 90 | 104 | 110 | 88 |
| Ride comfort | 103 | 97 | 101 | 98 | 90 | 105 |
| R/N | 103 | 97 | 101 | 98 | 90 | 105 |
| P/N | 103 | 97 | 101 | 98 | 100 | 100 |
| Combined | 611 | 608 | 610 | 609 | 603 | 611 |

**[Table 3]**

| | Ex. 7 | Ex. 8 | Ex. 9 | Ex. 10 | Ex. 11 | Ex. 12 |
|---|---|---|---|---|---|---|
| CAP/BASE structure | FIG. 6 | FIG. 6 | FIG. 6 | FIG. 6 | FIG. 6 | FIG. 6 |
| WTB/WBS [%] | 100 | 100 | 100 | 100 | 100 | 100 |
| ARc [%] | 2.3 | 2.3 | 2.3 | 2.3 | 2.3 | 2.3 |
| ARm [%] | 2.3 | 2.3 | 2.3 | 2.3 | 2.3 | 2.3 |
| ARs [%] | 9.0 | 9.0 | 9.0 | 9.0 | 9.0 | 9.0 |
| Tread pattern | FIG. 7 | FIG. 7 | FIG. 7 | FIG. 7 | FIG. 7 | FIG. 7 |
| WGT/CW [%] | 25 | 25 | 25 | 25 | 25 | 25 |
| WS2/WC [%] | 119 | 119 | 119 | 119 | 119 | 119 |
| WM2/WC [%] | 108 | 96 | 102 | 102 | 102 | 102 |
| WM1/WC [%] | 95 | 95 | 101 | 89 | 95 | 95 |
| WS1/WC [%] | 95 | 95 | 95 | 95 | 101 | 89 |
| W2/WC [%] | 53 | 53 | 53 | 53 | 53 | 53 |
| WC/CW [%] | 14.5 | 14.9 | 14.5 | 14.9 | 14.5 | 14.9 |
| RRC | 98 | 98 | 98 | 98 | 98 | 98 |
| Durability | 115 | 115 | 115 | 115 | 115 | 115 |
| Responsiveness | 105 | 91 | 102 | 94 | 101 | 95 |
| Ride comfort | 92 | 104 | 97 | 102 | 98 | 101 |
| R/N | 92 | 104 | 97 | 102 | 98 | 101 |
| P/N | 100 | 100 | 100 | 100 | 100 | 100 |
| Combined | 602 | 612 | 609 | 611 | 610 | 610 |

As shown in Tables 1 to 3, it is confirmed that in each Example, occurrence of tread peeling is suppressed while suppressing an increase in rolling resistance. From the evaluation results, advantages of the present invention are clear.

The above-described technology capable of suppressing occurrence of tread peeling while suppressing an increase in rolling resistance can be applied to various tires.

### [Additional Note]

The present invention includes aspects described below.
[1] A tire including a pair of beads, a carcass extending on and between the pair of beads, a tread located radially outward of the carcass, and a belt located between the tread and the carcass, wherein
   the tread includes a base layer and a cap layer covering the entire base layer,
   the cap layer is harder than the base layer,
   a loss tangent at 70°C of the base layer is lower than a loss tangent at 30°C of the cap layer,
   each end of the base layer is located axially inward of an end of the belt,
   the belt includes an inner belt ply and an outer belt ply located radially outward of the inner belt ply,
   each end of the outer belt ply is located axially inward of an end of the inner belt ply,
   the tread has a tread pattern including a plurality of circumferential grooves, thereby forming a plurality of land portions aligned in an axial direction in the tread,
   the plurality of land portions include, in a portion between an equator plane of the tire and an end of the tread, a crown land portion located on the equator plane side, a shoulder land portion located on the tread end side, and a middle land portion located between the crown land portion and the shoulder land portion,
   a proportion ARc of the cap layer occupying the crown land portion is represented as an average value of a ratio of a cap layer thickness to a base layer thickness in the crown land portion,
   a proportion ARm of the cap layer occupying the middle land portion is represented as an average value of a ratio of a cap layer thickness to a base layer thickness in the middle land portion,
   a proportion ARs of the cap layer occupying the shoulder land portion is represented as an average value of a ratio of a cap layer thickness to a base layer thickness in the shoulder land portion,
   the cap layer proportion ARc of the crown land portion is not less than 1.5 and not greater than 3.5,
   the cap layer proportion ARm of the middle land portion is equal to or higher than the cap layer proportion ARc of the crown land portion, and
   the cap layer proportion ARs of the shoulder land portion is higher than the cap layer proportion ARm of the middle land portion and not less than 5.0 and not greater than 9.5.
[2] The tire according to [1] above, wherein a position of each end of the cap layer coincides with a position of the end of the belt in the axial direction, or each end of the cap layer is located axially outward of the end of the belt.
[3] The tire according to [1] or [2] above, wherein
   a ground-contact surface obtained when the tire is fitted onto a standardized rim, an internal pressure of the tire is adjusted to 250 kPa, a camber angle of the tire is set to 0 degrees, a vertical load is applied to the tire, and the tire is brought into contact with a road surface composed of a flat surface, is a standard ground-contact surface,
   the vertical load applied to the tire is not less than 60% and not greater than 80% of a load indicated by a load index of the tire,
   a ground-contact width of the standard ground-contact surface is not less than 70% and not greater than 80% of a nominal cross-sectional width of the tire, and
   a ratio of a sum of groove widths of the plurality of circumferential grooves included in the standard ground-contact surface to the ground-contact width of the standard ground-contact surface is not less than 20% and not greater than 30%.
[4] The tire according to [3] above, wherein
   the tread pattern includes the four circumferential grooves, thereby forming the five land portions in the tread,
   the five land portions are the crown land portion located on the equator plane, a pair of the middle land portions located axially outward of the crown land portion, and a pair of the shoulder land portions located axially outward of the respective middle land portions, and
   a ratio of a width of the crown land portion to the ground-contact width of the standard ground-contact surface is not less than 14% and not greater than 16%.
[5] The tire according to [4] above, wherein
   of the two ends of the tread, one end located on an inner side in a width direction of a vehicle when the tire is mounted on the vehicle is a first reference end, and another end is a second reference end,
   a width of the shoulder land portion on the first reference end side is not less than 90% and not greater than 100% of the width of the crown land portion,
   a width of the middle land portion on the first reference end side is not less than 90% and not greater than 100% of the width of the crown land portion,
   a width of the middle land portion on the second reference end side is not less than 97% and not greater than 107% of the width of the crown land portion, and
   a width of the shoulder land portion on the second reference end side is not less than 114% and not greater than 124% of the width of the crown land portion.
[6] The tire according to [4] or [5] above, wherein
   the first reference end side of the crown land portion with respect to the equator plane is a first portion, and the second reference end side of the crown land portion with respect to the equator plane is a second portion, and
   a ratio of a width of the second portion to the width of the crown land portion is not less than 51% and not greater than 55%.

## Claims

1. A tire (2) comprising a pair of beads (12), a carcass (14) extending on and between the pair of beads (12), a tread (4) located radially outward of the carcass (14), and a belt (20) located between the tread (4) and the carcass (14), wherein
the tread (4) includes a base layer (34) and a cap layer (36) covering the entire base layer (34),
the cap layer (36) is harder than the base layer (34),
a loss tangent at 70°C of the base layer (34) is lower than a loss tangent at 30°C of the cap layer (36),
each end (BE) of the base layer (34) is located axially inward of an end (20e) of the belt (20),
the belt (20) includes an inner belt ply (50) and an outer belt ply (52) located radially outward of the inner belt ply (50),
each end (52e) of the outer belt ply (52) is located axially inward of an end (50e) of the inner belt ply (50),
the tread (4) has a tread pattern including a plurality of circumferential grooves (30, 30s, 30m), thereby forming a plurality of land portions (32) aligned in an axial direction in the tread (4),
the plurality of land portions (32) include, in a portion between an equator plane (EL) of the tire (2) and an end (Te) of the tread (4), a crown land portion (32c) located on the equator plane (EL) side, a shoulder land portion (32s) located on the tread end (Te) side, and a middle land portion (32m) located between the crown land portion (32c) and the shoulder land portion (32s),
a proportion ARc of the cap layer (36) occupying the crown land portion (32c) is represented as an average value of a ratio (CCBC) of a cap layer thickness (CC) to a base layer thickness (BC) in the crown land portion (32c),
a proportion ARm of the cap layer (36) occupying the middle land portion (32m) is represented as an average value of a ratio (CMBM) of a cap layer thickness (CM) to a base layer thickness (BM) in the middle land portion (32m),
a proportion ARs of the cap layer (36) occupying the shoulder land portion (32s) is represented as an average value of a ratio (CS/BS) of a cap layer thickness (CS) to a base layer thickness (BS) in the shoulder land portion (32s),
the cap layer proportion ARc of the crown land portion (32c) is not less than 1.5 and not greater than 3.5,
the cap layer proportion ARm of the middle land portion (32m) is equal to or higher than the cap layer proportion ARc of the crown land portion (32c), and
the cap layer proportion ARs of the shoulder land portion (32s) is higher than the cap layer proportion ARm of the middle land portion (32m) and not less than 5.0 and not greater than 9.5.

2. The tire (2) according to claim 1, wherein a position of each end (CE) of the cap layer (36) coincides with a position of the end (20e) of the belt (20) in the axial direction, or each end (CE) of the cap layer (36) is located axially outward of the end (20e) of the belt (20).

3. The tire (2) according to claim 1 or 2, wherein
a ground-contact surface obtained when the tire (2) is fitted onto a standardized rim (R), an internal pressure of the tire (2) is adjusted to 250 kPa, a camber angle of the tire (2) is set to 0 degrees, a vertical load is applied to the tire (2), and the tire (2) is brought into contact with a road surface composed of a flat surface, is a standard ground-contact surface,
the vertical load applied to the tire (2) is not less than 60% and not greater than 80% of a load indicated by a load index of the tire (2),
a ground-contact width (CW) of the standard ground-contact surface is not less than 70% and not greater than 80% of a nominal cross-sectional width of the tire (2), and
a ratio (WGT/CW) of a sum (WGT) of groove widths of the plurality of circumferential grooves (30, 30s, 30m) included in the standard ground-contact surface to the ground-contact width (CW) of the standard ground-contact surface is not less than 20% and not greater than 30%.

4. The tire (2) according to claim 3, wherein
the tread pattern includes the four circumferential grooves (30, 30s, 30m), thereby forming the five land portions (32) in the tread (4),
the five land portions (32) are the crown land portion (32c) located on the equator plane (EL), a pair of the middle land portions (32m) located axially outward of the crown land portion (32c), and a pair of the shoulder land portions (32s) located axially outward of the respective middle land portions (32m), and
a ratio (WC/CW) of a width (WC) of the crown land portion (32c) to the ground-contact width (CW) of the standard ground-contact surface is not less than 14% and not greater than 16%.

5. The tire (2) according to claim 4, wherein
of the two ends (Te) of the tread (4), one end (Te) located on an inner side in a width direction of a vehicle when the tire (2) is mounted on the vehicle is a first reference end (Te1), and another end (Te) is a second reference end (Te2),
a width (WS1) of the shoulder land portion (32s1) on the first reference end (Te1) side is not less than 90% and not greater than 100% of the width (WC) of the crown land portion (32c),
a width (WM1) of the middle land portion (32m1) on the first reference end (Te1) side is not less than 90% and not greater than 100% of the width (WC) of the crown land portion (32c),
a width (WM2) of the middle land portion (32m2) on the second reference end (Te2) side is not less than 97% and not greater than 107% of the width (WC) of the crown land portion (32c), and
a width (WS2) of the shoulder land portion (32s2) on the second reference end (Te2) side is not less than 114% and not greater than 124% of the width (WC) of the crown land portion (32c).

6. The tire (2) according to claim 4 or 5, wherein
the first reference end (Te1) side of the crown land portion (32c) with respect to the equator plane (EL) is a first portion (32c1), and the second reference end (Te2) side of the crown land portion (32c) with respect to the equator plane (EL) is a second portion (32c2), and
a ratio (W2/WC) of a width (W2) of the second portion (32c2) to the width (WC) of the crown land portion (32c) is not less than 51% and not greater than 55%.
